Europäisches Patentamt

European Patent Office

Office européen des brevets

(11) Publication number: **0 018 230**
**B1**

# EUROPEAN PATENT SPECIFICATION

(45) Date of publication of patent specification: **29.02.84**

(51) Int. Cl.³: **B 21 K 1/46, F 16 B 35/04**

(21) Application number: **80301287.1**

(22) Date of filing: **22.04.80**

(54) **Castor support shaft.**

(30) Priority: **23.04.79 JP 48939/79**
**30.10.79 JP 139265/79**

(43) Date of publication of application:
**29.10.80 Bulletin 80/22**

(45) Publication of the grant of the patent:
**29.02.84 Bulletin 84/9**

(84) Designated Contracting States:
**DE FR GB IT**

(56) References cited:
**CH - A - 301 050**
**CH - A - 397 388**
**DE - A - 633 410**
**DE - U - 1 942 770**
**FR - A - 630 997**
**FR - A - 636 020**
**GB - A - 642 917**
**GB - A - 653 877**
**US - A - 1 926 925**

(73) Proprietor: **Uchimura, Hayashi**
**33-5 Arakawa 4-chome Arakawa-ku**
**Tokyo (JP)**
(73) Proprietor: **Uchimura, Kuniji**
**14-2 Otsuka, 6-chome Bunkyo-ku**
**Tokyo (JP)**
(73) Proprietor: **Uchimura, Kunihiro**
**7-10 Tabatashimmachi, 1-chome Kita-ku**
**Tokyo (JP)**

(72) Inventor: **Uchimura, Hayashi**
**33-5 Arakawa 4-chome**
**Arakawa-ku Tokyo (JP)**

(74) Representative: **Laredo, Jack Joseph et al,**
**Elkington and Fife High Holborn House 52/54**
**High Holborn**
**London, WC1V 6SH (GB)**

(56) References cited:
**US - A - 2 150 524**
**US - A - 2 565 665**
**US - A - 2 764 053**
**US - A - 4 023 225**

Courier Press, Leamington Spa, England.

Castor support shaft

The present invention relates to a castor support shaft which is formed with a flange by compression moulding in the axial direction.

A castor support shaft consists of a flange and rod which are connected directly to each other. In a case in which a supporting shaft is formed by compression moulding in the axial direction, employing known methods the metal flow structure in the base region of the rod at the flange will be excessively bent and will be discontinuous in this portion.

GB—A—653,877 describes a method of cold forging a metal article from a rod which comprises applying pressure to the rod in the direction of its longitudinal axis to produce lateral flow of confined metal. This document teaches the formation of a thumb screw having a collar and flange which are formed in two distinct and separate steps. Similarly, CH—A—301,050 discloses a process for the production of screws by a hammering process employing repeated blows to form a flange of the screw. The screws produced have a channel on the base of that flange, which reflects the surface against which the flange was hammered. Such methods do not provide a favourable metal flow structure in the region of the flange and rod of the screws formed. Thus, the shaft is liable to break at this portion and hence cannot be used as it is. Therefore, an additional normalizing step is required, in order to reinforce such a weakened portion which is liable to break. However, when such a portion is normalized, although, breakage of the flange will be prevented, the entire shaft will become so soft as to be liable to bend.

The castor disclosed in FR—A—630,897 is designed to avoid the necessity for a relatively strong mounting disc for the tubular feet of a piece of furniture, by supporting the foot on a tubular spring frame on a tubular pivot support and therefore goes no way in solving the present problem.

It has been surprisingly found that a support shaft can be formed comprising a shaft and flange by compression moulding in the axial direction using a mould, such that, at the base of the shaft, the volume of material pressed out is increased by simultaneously forming an annual projection on the flange, thereby eliminating the formation of sharp bends or discontinuity in the metal flow structure in the flange and forming a strong support shaft for a castor.

Further, it has been surprisingly found that a support shaft formed by compression moulding in the axial direction to provide a shaft and flange in which the flange is simultaneously formed at the base of the shaft with an annular recess, the sharp bend in the flow lines of the metal structure at the base of the shaft is reduced so as to be as small as possible and forced inwards of the shaft. Such a support shaft has a metal structure which is not weakened in the surface layer and which is strong.

According to the present invention there is provided a castor support shaft of rimmed steel comprising a shaft having a flange at the base thereof formed by compression moulding in the axial direction thereof, characterised in that an annular projection or recess is provided at the base of the shaft on the flange which is formed simultaneously with the flange in a single operation during compression moulding.

Thus, in the present invention, a support shaft is formed in a similar manner to the prior art by compression moulding in the axial direction but, in this case, the flange and an annular projection or recess are formed simultaneously at the base of the shaft on the flange in the compression step and therefore the flow structure of the material forming the shaft continues comparatively gradually and favourably between the shaft and flange, and the base of the shaft at the flange will not be weakened by sharp bends in the metal structure.

Embodiments of the present invention will now be described, by way of examples, with reference to the accompanying drawings, in which:

Figure 1 is a vertically sectioned view of a castor having a support shaft according to an embodiment of the present invention;

Figure 2 is a vertically sectioned view of the castor support shaft shown in Figure 1, illustrating the metal flow structure;

Figure 3 is a vertically sectioned view of a conventional compressed and moulded castor supporting shaft showing the metal flow structure;

Figure 4 is a vertically sectioned view showing another type of castor using the same support shaft as that shown in Figure 2.

Figure 5 is a vertically sectioned view of a castor having a support shaft of another embodiment of the invention;

Figure 6 is a vertically sectioned view of the castor support shaft of the castor shown in Figure 5, illustrating the metal flow structure;

Figure 7 is a vertically sectioned view of a castor having a support shaft of a further embodiment of the invention;

Figure 8 is a vertically sectioned view showing a compression moulding process for a castor support shaft;

Figure 9 is a vertically sectioned view of the castor support shaft in Figure 8, illustrating the metal flow structure.

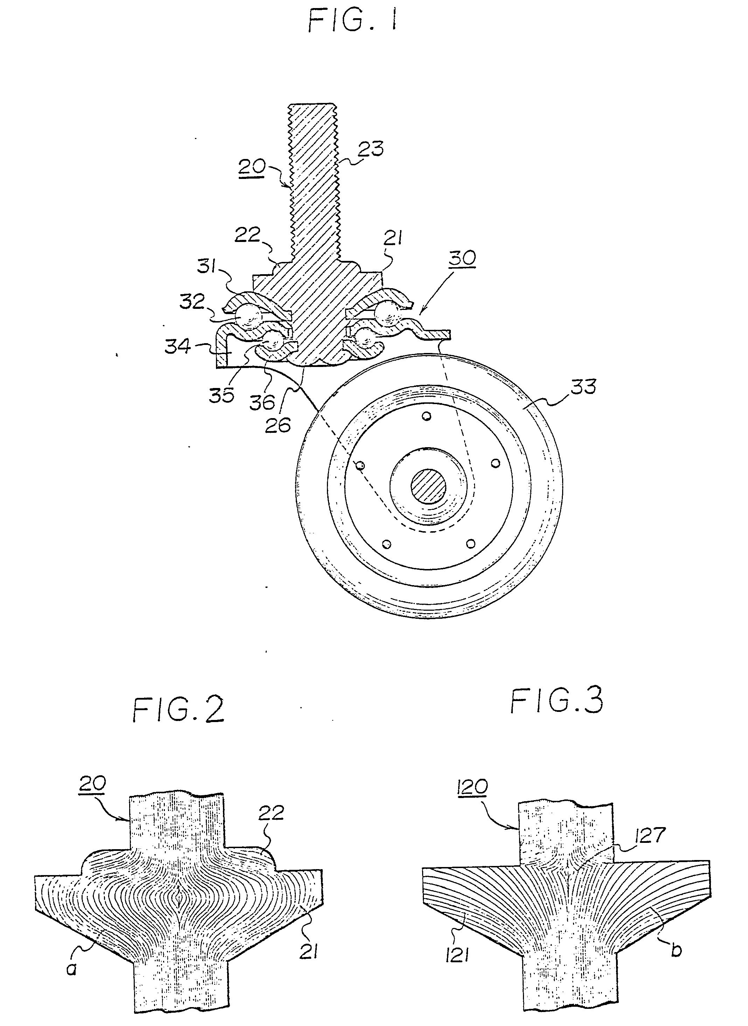

Figure 1 shows an embodiment of a castor support shaft of the present invention. A castor 30 is supported by a support shaft 20. An upper dish 31, balls 32, rotary frame 34 having a wheel 33, balls 35 and lower dish 36 are inserted in and rotated below a flange 21 of the support shaft 20 and are fitted between the flange 21 of the support shaft and the calked portion at the lower end of the support shaft 20. A threaded rod 23 in the upper portion of the support shaft is provided for securing the castor to an object to be carried.

The support shaft 20, which has an annular projection 22 at the base of the rod on the flange 22 is formed by compression moulding. Pressure is applied axially to a cold rolled carbon steel rod relative to a mould which is provided with an annular recess which corresponds to the annular projection 22. The flow line *a* of the metal structure of this supporting shaft 20 favourably describes a comparatively gentle curve as shown in Figure 2.

On the other hand, in a known castor supporting shaft 120 shown in Figure 3, having no annular projection at the base of the shaft on a flange 121, the flow line *b* of the metal structure is sharply bent near the base 127 on the flange 121 and the metal flow structure is discontinuous and weakened in this portion. Such portions 127 in which the metal flow structure is discontinuous extend in a substantially straight line from end to end of the shaft diameter.

In order to compare the strengths of two castor support shafts made of rimmed steel, one having a projection 22 of a diameter 12.2 mm and the other having no projection, a supporting shaft of each kind was fixed at both ends and a force was applied to each in a direction perpendicular to the shaft, just above the flange. The former reached the elastic limit at about 2300 kg while the latter reached it at about 1300 kg. It is evident from this that the strength of the support shaft 20 having the projection 22 is significantly higher.

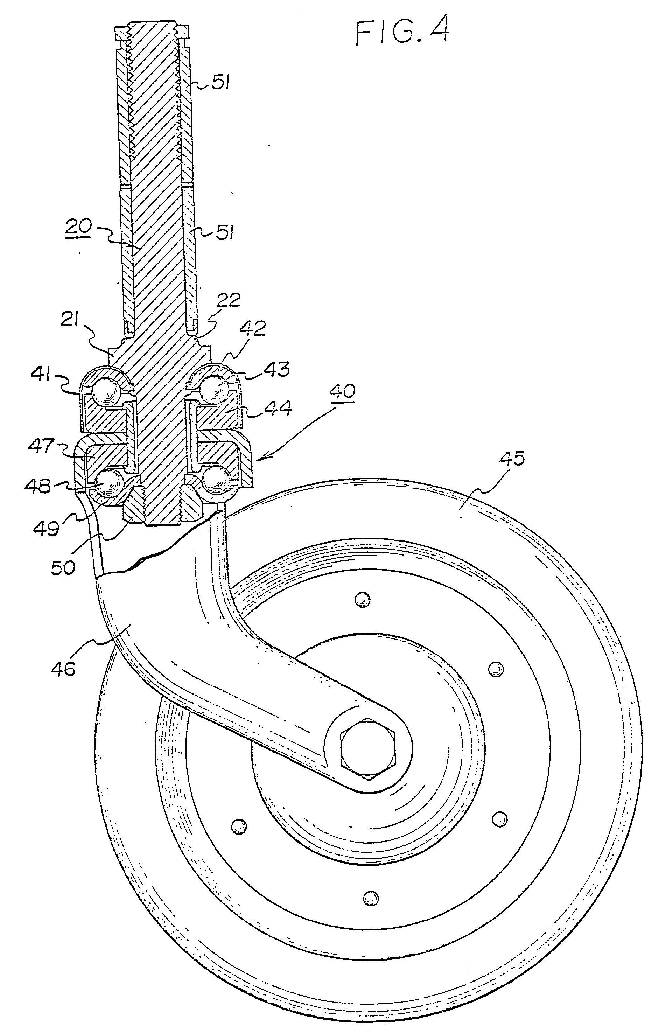

Figure 4 shows another castor 40 having the same support shaft 20 as that shown in Figure 2. A cover 41, upper dish 42, balls 43, ball bearing 44, rotary frame 46 having a wheel 45, ball bearing 47, balls 48 and lower dish 49 are located in turn below the support shaft 20 of the castor 40 and are fitted between the flange 21 and a nut 50 screwed to the lower end of the supprt shaft 20. The upper portion of the support shaft 20 to be fitted to the lower portion of an object to be carried is covered with a cover tube 51 made of rubber or elastic resin.

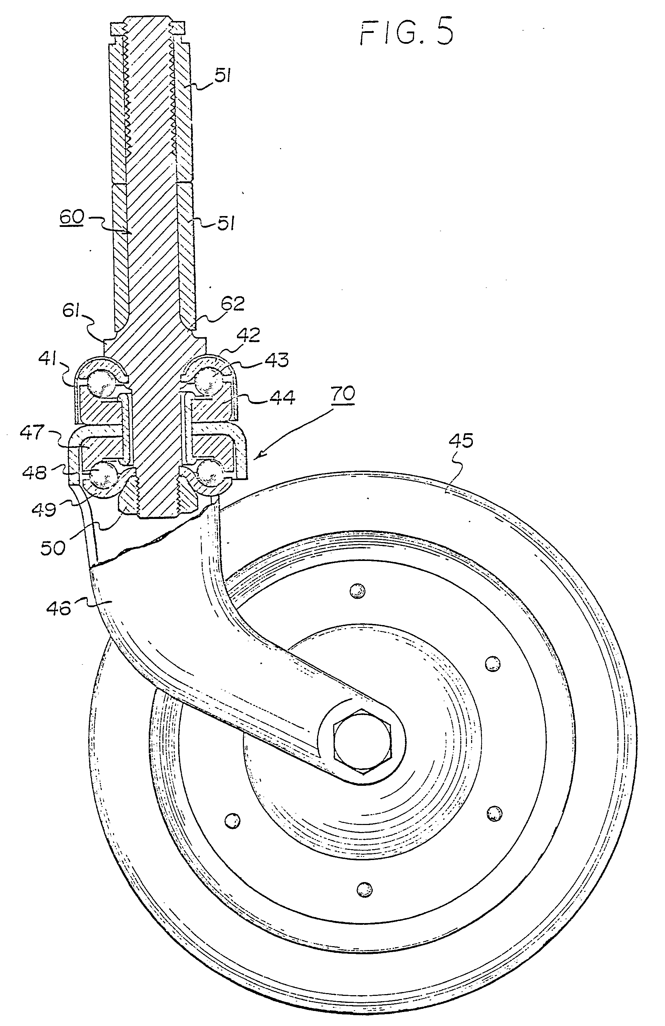

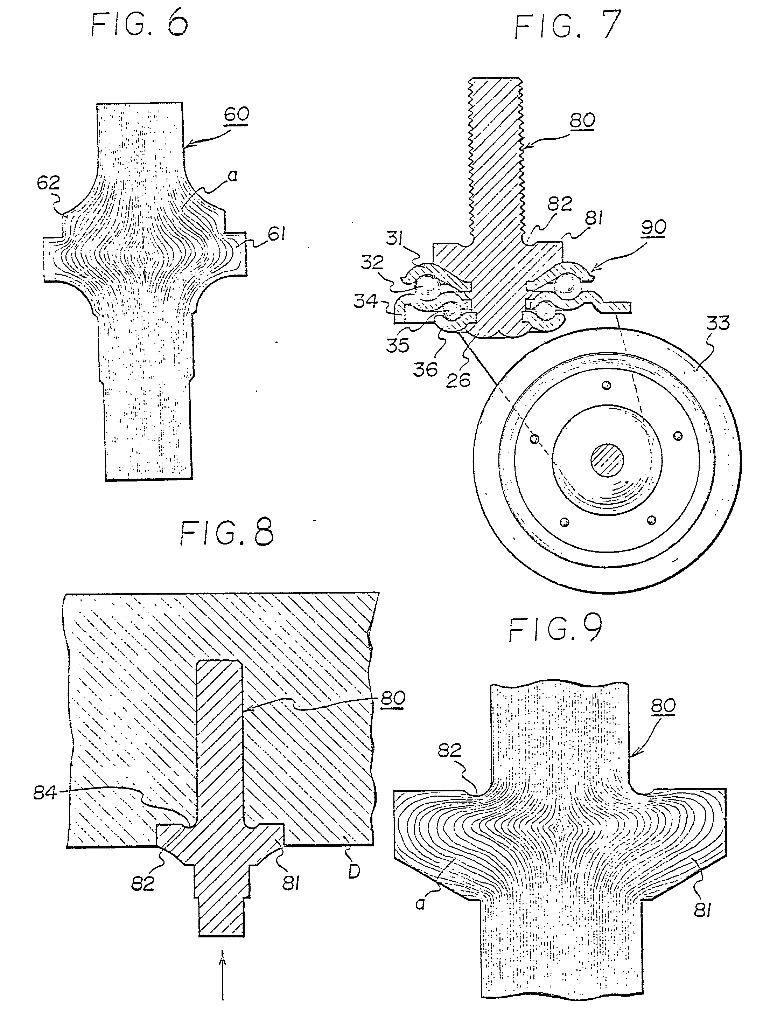

Figure 5 shows a castor 70 of the same structure as that shown in Figure 4 including an alternative support shaft 60. This support shaft 60 is made of a light alloy and is so formed that an annular projection 62 is located on a flange 61 at the base of the shaft whose diameter gradually decreases with distance from the flange 61 as shown in Figure 6. As shown in Figure 6, the metal structure does not bend excessively but describes a continuous, comparatively gradual curve *a* to provide a high strength.

When the support shaft 60 having a projection of diameter 12.2 mm and a support shaft of the same material and diameter but having no projection were tested to compare their strengths by the method mentioned above, the former reached the elastic limit at 1550 kg while the latter reached it at 1400 kg.

Figure 7 shows a castor 90 having an alternative supporting shaft 80 and a flange 81, the structure of this castor 90 being otherwise the same as that of the above described castor 30 shown in Figure 1.

As shown in Figures 7 and 9, an annular recess 82 arcuate in the vertical section is formed at the base of the shaft on the flange 81. As shown in Figure 8, this recess 82 is formed simultaneously with the flange 81 by compressing a rod made of rimmed steel in the direction indicated by the arrow relative to a mould D having a corresponding annular projection 84.

The metal structure of the supprt shaft 80 formed is shown in Figure 9. The portion of the shaft 80 having a sharp bend is comparatively small and does not lie in the surface layer near the base of the shaft on the flange but is forced inwards. Therefore, a comparatively high strength is obtained.

In order to compare the strengths of a support shaft 80 having an annular recess of diameter 12.7 mm and a support shaft of the same diameter and material but having no recess, each shaft was fixed at both ends and a force of about 2700 kg was applied in a direction perpendicular to the shaft just above the flange so as to bend the shaft. In the latter shaft the base of the shaft on the flange cracked, whereas the shaft according to the invention did not.

## Claims

1. A castor support shaft of rimmed steel comprising a shaft (20, 60, 80) having a flange (21, 61, 81) at the base thereof formed by compression moulding in the axial direction thereof, characterised in that an annular projection (22, 62) or recess (82) is provided at the base of the shaft (20, 60, 80) on the flange (21, 61, 81) which is formed simultaneously with the flange in a single operation during compression moulding.

2. A castor support shaft according to claim 1 in which an annular projection (62) is provided on the flange (61) whose diameter gradually decreases with distance from the flange (61).

## Patentansprüche

1. Laufrollen-Halteschaft aus unberuhigtem Stahl, mit einem Schaft (20, 60, 80), der an seiner Basis einen Durch Formpressen in axialer Richtung des Schaftes gebildeten Flansch (21, 61, 81) aufweist, dadurch gekennzeichnet, daß an der Basis des Schaftes (20, 60, 80) auf dem Flansch eine ringförmige Erhebung (22, 62) oder Ausnehmung (82) vorgesehen ist, die während des Formpressens gleichzeitig mit dem Flansch in einem einzigen Arbeitsgang gebildet ist.

2. Laufrollen-Halteschaft nach Anspruch 1, bei welchem auf dem Flansch (61) eine ringförmige Erhebung (62) vorgesehen ist, deren Durchmesser sich mit zunehmendem Abstand von Flansch (61) immer mehr verringert.

**Revendications**

1. Arbre support de roulette en acier effervescent comprenant un arbre (20, 60, 80) présentant à sa base un rebord (21, 61, 81) formé par moulage par compression dans sa direction axiale, caractérisé par le fait qu'une saille annulaire (22, 62) on un évidement (82) est formé à la base de l'arbre (20, 60, 80) sur le rebord (21, 61, 81) en même temps que le dit rebord en une seule opération pendant le moulage par compression.

2. Arbre support de roulette selon la revendication 1, dans lequel une saillie annulaire (62) est prévue sur le rebord (61), son diamètre diminuant graduellement avec la distance au rebord (61).

FIG. 1

FIG.2

FIG.3

1

FIG. 4

2

FIG. 5

FIG. 6

FIG. 7

FIG. 8

FIG. 9

4